# EUROPEAN PATENT APPLICATION

(11) **EP 0 673 672 A2**
(43) Date of publication of application: **27.09.1995**
(21) Application number: 95104286.0
(22) Date of filing: 23.03.1995
(51) Int. Cl.: B01D 63/02, C02F 1/44

(54) **Apparatus for processing liquids**

(30) Priority: 25.03.1994 JP 79473/94
(71) Applicant: NISSHO CORPORATION, Osaka-shi, Osaka-fu (JP)
(72) Inventor: Masuda, Toshiaki, Ohtsu-shi, Shiga-ken (JP); Morita, Yasuhiko, Nishinomiya-shi, Hyogo-ken (JP)
(74) Representative: Weisert, Annekäte, Dipl.-Ing. Dr.-Ing.

(57) **Abstract**

An apparatus for processing liquids has a container (4) having an inlet (5) for the liquid and an air exhaust (7). The apparatus has a cap (8') closing one end of the container and having an outlet (6) for the liquid, and a further (8) cap closing the other end of the container and having neither an inlet port nor an outlet port. A plurality of semipermeable hollow fibers (2) accommodated in the container are arranged in parallel with and longitudinally of the container (4). One end of each hollow fiber (2) extends through a seal (3') so as to communicate with the outlet, while the other end terminates in a further seal (3) so as to be closed therein, so that in spite of a simple, smaller and inexpensive structure, this apparatus is effective to prevent any amount of antiseptic solution from remaining unexhausted.

## Description

### BACKGROUND OF THE INVENTION

### 1 Field of the Invention

The present invention relates to an apparatus for processing liquids to remove therefrom a chemical substance, and more particularly relates to a liquid processing apparatus for use to remove endotoxin from water.

### 2. Description of the Prior Art

Usually, water and aqueous solutions of any solutes contain a small quantity of endotoxin harmful to living bodies. Therefore, those waters involved in the medical, pharmaceutical and the like fields have to be purified before use as completely as possible. A simple but effective method of removing pyrogens has been wanted for long.

Many natural compounds are known as the pyrogens, and the pyrogen existent in water usually consists of lipopolysaccharides. Those saccharides originating from the cell membranes of gram-negative bacteria are called 'endotoxin'.

Even an extremely small quantity of endotoxin having entered a human or animal blood inevitably causes fever, chill and/or shock. Thus, it is a very important requirement that the water used in hospitals, in pharmaceutical industries, in liquids and medicines for transfusion, vaccines and the like must be free of endotoxin.

The prior art methods of removing endotoxin have generally relied on fine distillation, filtration or adsorption system. However, distillation of raw water incurs much consumption of energy, ad one- pass distillation is not necessarily sufficient to fully eliminate endotoxin.

Nowadays, an adsorptive filter is used in combination with an ordinary filter in some cases, wherein the former removes small molecules and the latter removes smaller molecules. The adsorptive filters do scarcely suffer the problem of leakage, contrary to the ordinary filters.

Inexpensive and compact apparatuses of certain types have been proposed for removing bacteria. If two kinds of membraneous filter elements are simply packed in one housing, then the liquid will tend to flow only through the elements of either kind, failing to ensure a reliable and accurate filtration. In order to avoid this problem, those filter elements of the two kinds are packed in different housings communicating with each other through a conduit.

Those housings which are now widely used in the field comprise each a cylinder with semipermeable hollow fibers packed therein. Partitioning walls or seals tightly secured to the inner periphery of this cylinder hold opposite ends of each fiber. Each cap closing the cylinder end has an inlet or outlet, and chambers are formed between the caps and the corresponding walls so that the ends of each fiber are opened in the chambers.

In use of such an apparatus comprising the cylinder, the outlet from one cap will be kept open, with the inlet to the other cap being closed. Thus, there is a likelihood that a considerable amount of an antiseptic solution introduced in the cylinder prior to use may remain, within a dead space appearing between the closed side cap and partitioning wall.

### SUMMARY OF THE INVENTION

Therefore, an object of the present invention is to render free from this problem the apparatus for processing liquids.

According to the invention, the apparatus may preferably comprise: a container having open ends, on inlet for the liquid and an air exhaust; a first cop closing one of the open ends of the container and having an outlet for the liquid to be processed; a second cap closing the other open end of the container and having neither an inlet port nor an outlet port; a plurality of semipermeable hollow fibers accommodated in the container and arranged in parallel with and longitudinally of the container; a first seal disposed in the container and adjacent to the first cap; a second seal disposed in the container and adjacent to the second cap; and the seals being in close contact with an inner periphery of the container and holding in place both ends of each hollow fiber, wherein one end of each hollow fiber extends through the first seal so as to communicate with the outlet, and the other end of each hollow fiber terminates in the second seal so as to be closed therein.

The apparatus proposed herein is particularly adapted to remove endotoxin from water.

### BRIEF DESCRIPTION OF THE DRAWINGS

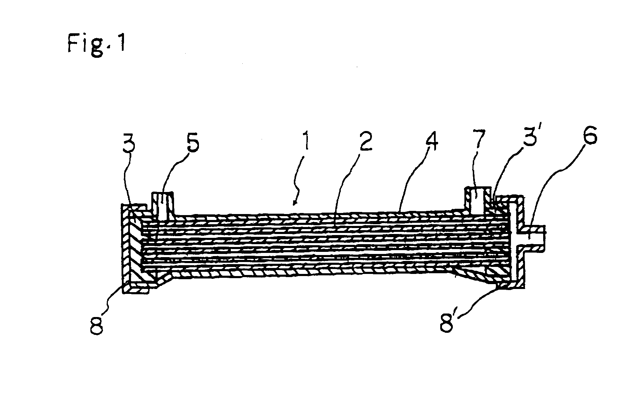

Fig. 1 is a vertical cross section an apparatus for processing liquids, provided in accordance with an embodiment of the invention.

### DESCRIPTION OF THE PREFERRED EMBODIMENTS

As shown in the drawings, a housing 1 is composed of a first cap 8' having an outlet 6, a second cap 8 having no inlet or outlet port, and a container 4. Those caps are tightly fixed to the container 4 having an inlet 5 for the liquid to be processed and an air exhaust 7.

A plurality of semipermeable hollow fibers 2 are packed in the container 4. Both ends of each hollow fiber 2 are fixed to a first seal 3' and a second seal 3, which seals are secured in the container 4. The hollow fibers 2 are arranged in parallel with the inner periphery of said container and longitudinally thereof. One end of each hollow fiber 2 is closed by and in the second seal 3. The other end of each fiber penetrating the first seal 3' is held thereby in place so as to communicate with the outlet 6.

The seals 3 and 3' are in close contact with the inner periphery of container 4.

The apparatus for processing liquids as summarized above will operate as follows. The liquid, which may typically be a water, will enter this apparatus through the inlet 5 disposed close to the second seal 3. The liquid will then permeate inwardly a cylindrical wall of a filament, which is employed as each hollow fiber 2 having an axial bore. The liquid fractions having entered the axial bores of such filaments will be collected in the first cap 8', before discharged through the outlet 6 for various uses.

The semipermeable hollow fibers employed herein are fine cylindrical membranes of a porous material. An infinite number off fine pores or voids spread throughout the porous material are of microscopic sizes. The material may preferably be selected from a group consisting of: polyamide; polyester; polyvinyl alcohol; polycarbonate; polyolefin; polysulfone; polyacrylate and the like. If polyethylene or polypropylene is used as the polyolefin, then an adsorptive fiber capable of adsorbing endotoxin will be obtained.

The seals may be discs made of an epoxy resin, polyurethane resin, silicone resin or the like.

The diameter of each microscopic pore may be 0.5 µm or less, and more preferably 0.05 - 0.1 µm. Coarser pores of a diameter exceeding 0.5 µm will render the hollow fibers scarcely adsorptive of endotoxin.

The preferred material forming the container and the caps includes: polyolefin, polycarbonate, polyacrylate, polyacrylonitrile, polystyrol, polyvinyl chloride and the like. The container may be a cylinder easy to manufacture, and the air exhaust is formed therein to discharge any gas present in the liquid being processed.

The one ends of all hollow fibers, viz, filaments, 2 are embedded and closed in the second seal 3. Therefore, any amount of antiseptic solution introduced in this apparatus through the inlet 5 or outlet 6 will never flow in between the second seal 3 and second cap 8 and stay in the interior of this apparatus.

In summary, the blind second cap 8 having no inlet or outlet and the first cap 8' having the outlet 6 are employed herein to fit on the opposite ends of the cylindrical container 4 to thereby form a housing 1. Thus, there is now no need to close any ports indispensable in the prior art caps, such as that indicated by the reference numeral 8 and opposed to the other cap having the outlet for the processed liquid. Further, users can readily and surely know which end of the apparatus is the head or tail thereof, thanks to the outlet which only the first cap has.

It will now be apparent that the structure proposed herein is so simple and concise that a smaller-sized and inexpensive apparatus for processing liquids is offered. In addition, the apparatus is improved at various points mentioned above.

### EXAMPLES

In an example of the described embodiment, an apparatus for removing endotoxin was prepared and tested as follows.

Filaments of polysulfone hollow fiber were used whose overall surface area of membraneous walls was 0.9 m^{2.} The wall defining through each filament a fine cylindrical space having an inner diameter of 300 µm was 100 µm thick. A cylinder and caps made of a polycarbonate resin were used in combination with seals made of a polyurethane resin, the seals securing the ends of each filament.

This apparatus was designed to operate under the following conditions: the highest liquid pressure of 1.5 Kgf/cm² at the inlet; the highest operating temperature of 40 _{°} C ( sterilized at 95 _{°} C for 30 minutes ); capacity of 1,000 ml/min ( at 0.25 Kgf/cm² and 37 _{°} C ); the liquid pressure loss of 0.13 Kgf/cm² ( at flow rate of 500 ml/min ); and the critical molecular weight of 6,000 ( for protein ).

Vitamin B₁₂ off M.W. ( = molecular weight ) 1,300 as well as insulin of M.W. 5,700 and lysozyme off M.W. 13,000 ware dissolved to give solutions thereof. Precision dialysis of these solutions was carried out using the apparatus. Molecules of M.W. 5,700 or more were completely removed from the solution.

Dialyzing performance of this apparatus was tested using an aqueous liquid containing endotoxin. Concentration of endotoxin was 239 pg/ml at the inlet of said apparatus, and was found to have decreased to 0.3 pg/ml or less at the outlet. The reagent 'HSII Wakoh' made by the Wakoh Jun'yaku Co., Ltd. as a blood cell extract from horseshoe crabs was used as the reference in turbidimetrically determine the endotoxin concentration.

The performance off the apparatus was further tested using an aqueous liquid containing colloidal solid particles. The number of said particles was 370,000 per milliliter at the inlet, and decreased to 0 per milliliter. A film having a diameter of 25 mm and pores off 0.2 _{/1}.m was used to collect the particles, and the number thereof was inspected using an electron microscope at a magnification off 4,000.

Pressure loss of the tested dialyzation liquid flowing through the apparatus at a flow rate of 500 ml/min was also measured in the course of time. The initial pressure loss of 0.08 Kgf/cm² increased to 0.12 Kgf/cm² after operated for 6 weeks, and up to 0.14 Kgf/cm² after operated for 6 months from the start.

## Claims

1. An apparatus for processing liquids, the apparatus comprising:
a container having open ends, an inlet for the liquid and an air exhaust;
a first cap closing one of the open ends of the container and having an outlet for the liquid to be processed;
a second cap closing the other open end of the container and having neither an inlet port nor an outlet port;
a plurality off semipermeable hollow fibers accommodated in the container and arranged in parallel with and longitudinally of the container;
a first seal disposed in the container and adjacent to the first cap;
a second seal disposed in the container and adjacent to the second cap; and
the seals being in close contact with an inner periphery of the container and holding in place both ends of each hollow fiber,
wherein one end off each hollow fiber extends through the first seal so as to communicate with the outlet, and the other end of each hollow fiber terminates in the second seal so as to be closed therein.

2. An apparatus for removing endotoxin from liquids, the apparatus comprising:
a container having open ends, an inlet for the liquid and an air exhaust;
a first cap closing one of the open ends of the container and having an outlet for the liquid to be processed;
a second cap closing the other open end of the container and having neither an inlet port nor an outlet port;
a plurality Of semipermeable hollow fibers accommodated in the container and arranged in parallel with and longitudinally of the container;
a first seal disposed in the container and adjacent to the first cap;
a second seal disposed in the container and adjacent to the second cap; and
the seals being in close contact with an inner periphery off the container and holding in place both ends of each hollow fiber,
wherein one end of each hollow fiber extends through the first seal so as to communicate with the outlet, and the other end of each hollow fiber terminates in the second seal so as to be closed therein.

3. An apparatus as defined in claim 1 or 2, wherein the container is a cylinder.
